Europäisches Patentamt

European Patent Office

Office européen des brevets

(11) Numéro de publication : **0 484 202 B1**

(12) **FASCICULE DE BREVET EUROPEEN**

(45) Date de publication du fascicule du brevet :
**18.05.94 Bulletin 94/20**

(51) Int. Cl.⁵ : **G01C 25/00**

(21) Numéro de dépôt : **91402820.4**

(22) Date de dépôt : **23.10.91**

(54) **Système pour l'alignement de la centrale inertielle d'un véhicule porté sur celle d'un véhicule porteur.**

(30) Priorité : **29.10.90 FR 9013386**

(43) Date de publication de la demande :
**06.05.92 Bulletin 92/19**

(45) Mention de la délivrance du brevet :
**18.05.94 Bulletin 94/20**

(84) Etats contractants désignés :
**CH DE ES GB IT LI NL SE**

(56) Documents cités :
**EP-A- 0 179 197**
**EP-A- 0 184 632**
**EP-A- 0 276 663**

(56) Documents cités :
**IEEE TRANSACTIONS ON AEROSPACE AND
ELECTRONIC SYSTEMS, vol. AES16, no. 1,
janvier 1980, New York, US, pages 53-65;
I.Y.BAR-ITZHACK et al: "Accurate INS transfer alignment using a montior gyro and external navigation measurements"**

(73) Titulaire : **AEROSPATIALE SOCIETE
NATIONALE INDUSTRIELLE
37, Boulevard de Montmorency
F-75781 Paris Cédex 16 (FR)**

(72) Inventeur : **Gaide, Pierre
191, rue d'Alésia
F-75014 Paris (FR)**

(74) Mandataire : **Bonnetat, Christian
CABINET BONNETAT 23, Rue de
St.Pétersbourg
F-75008 Paris (FR)**

Jouve, 18, rue Saint-Denis, 75001 PARIS

**Description**

La présente invention concerne un système pour l'alignement de la centrale inertielle d'un véhicule porté sur elle d'un véhicule porteur. Un tel système est divulgué par le document EP-A-0 276 663.

On sait que, à la mise en fonctionnement d'une centrale inertielle, il est indispensable d'initialiser celle-ci pour que les informations d'angle, de vitesse et de position qu'elle délivre à l'instant d'initialisation correspondent exactement aux conditions d'attitude, de vitesse et de position de ladite centrale inertielle audit instant d'initialisation. En effet, les informations délivrées par ladite centrale, postérieurement à cet instant d'initialisation, sont obtenues par intégration de mesures gyrométriques et accélérométriques à partir des données initiales, de sorte que toute erreur d'initialisation entraîne des erreurs ultérieures croissantes.

Dans le cas où un véhicule porté (missile, avion, hélicoptère, torpille, etc ...), pourvu d'une centrale inertielle, est embarqué à bord d'un véhicule porteur (bateau, avion, camion, sous-marin, etc ...) également pourvu d'une centrale inertielle en cours de fonctionnement, il est usuel, avant que ledit véhicule porté ne quitte le véhicule porteur, d'initialiser la centrale inertielle dudit véhicule porté en exploitant les informations délivrées par la centrale inertielle du véhicule porteur. Une telle procédure d'initialisation d'une centrale inertielle sur l'autre est appelée "alignement".

On remarquera que, au cours d'une telle initialisation, les alignements en vitesse et en position ne soulèvent en général aucune difficulté, car la position relative des deux centrales inertielles est parfaitement connue.

En revanche, l'alignement en angle est une opération délicate, car l'orientation relative des deux centrales inertielles n'est pas parfaitement connue.

Dans ce qui suit, on ne considérera que l'alignement angulaire de deux centrales inertielles, et non pas les alignements en vitesse et en position. Par ailleurs, à des fins de simplification des explications, on considérera que chaque centrale inertielle est rapportée, comme cela est usuel, à un système intrinsèque d'axes de référence orthogonaux comportant deux axes horizontaux, dont l'un (axe N) est dirigé vers le Nord et l'autre (axe E) vers l'Est, et un axe vertical (axe Z), de sorte que, pour ladite centrale inertielle, les attitudes sont définies par trois angles appelés respectivement $\psi$ (angle de cap, par rapport à l'axe N), $\Theta$ (angle d'assiette par rapport au plan des axes N et E) et $\phi$ (angle de roulis), la vitesse est définie par trois composantes de vitesse VN, VE et VZ (respectivement par rapport auxdits axes N, E et Z) et la position est définie par trois coordonnées $\lambda$, G et $\underline{z}$, correspondant respectivement à la latitude, à la longitude et à l'altitude. Bien entendu, un tel système d'axes de référence n'est indiqué que pour faciliter les explications. L'invention n'est pas liée à ce système qui pourrait, dans le cadre de la présente invention, être remplacé par un autre système de référence.

On remarquera que les trois angles $\psi$, $\Theta$ et $\phi$ font passer du système intrinsèque d'axes de référence au système d'axes physiques lié à la centrale inertielle considérée.

Les mesures angulaires de $\psi$, $\Theta$ et $\phi$ d'une centrale inertielle permettent, de façon inverse, de définir le système d'axes de référence de calcul de cette centrale.

A partir des axes physiquement liés à la centrale, les rotations inverses (-$\phi$ mesuré, puis -$\Theta$ mesuré, puis -$\psi$ mesuré) font passer au système d'axes de référence de calcul, qui se trouve confondu avec le système intrinsèque d'axes de référence, si les mesures sont parfaites.

Ainsi, on définit un ensemble de rotations ($\phi 1$, $\phi 2$, $\phi 3$) pour passer du système intrinsèque de référence au système d'axes de référence de calcul, $\phi 1$, $\phi 2$ et $\phi 3$ correspondant respectivement à des rotations autour de l'axe Nord, de l'axe Est et de l'axe vertical du système intrinsèque d'axes de référence.

De plus, on appellera erreurs angulaires d'harmonisation (h1, h2, h3) les erreurs angulaires sur la connaissance de l'orientation des axes physiquement liés à la centrale du véhicule porté, h1, h2 et h3 correspondant respectivement à des rotations autour de ces derniers axes.

On notera que $\phi 1$, $\phi 2$ et $\phi 3$ sont sensiblement constants, aux dérives près des systèmes gyrométriques, dans le système des axes Nord, Est et vertical, et que h1, h2 et h3, qui représentent physiquement des erreurs de calage mécanique, sont sensiblement constants dans le système des axes liés physiquement à la centrale inertielle du véhicule porté.

Par projection des erreurs d'harmonisation h1, h2, h3 sur les axes du système de référence intrinsèque, on définit des erreurs h1V, h2V, h3C, qui ne sont donc pas constantes quand les attitudes du porteur varient, h1V et h2V correspondant à des erreurs d'harmonisation verticales et h3C à une erreur d'harmonisation de cap.

On connaît déjà plusieurs méthodes d'alignement angulaire d'une centrale inertielle sur une autre.

Dans les explications qui suivent, on peut supposer que les centrales inertielles du véhicule porteur et du véhicule porté sont parallèles dès que leur position angulaire relative est connue, ceci dans le but de simplifier les explications.

La méthode la plus simple consiste, à l'instant de l'initialisation de la centrale inertielle du véhicule porté, à recopier dans celle-ci les angles $\psi$, $\Theta$ et $\phi$ de la centrale inertielle du véhicule porteur. Puis, pour éviter l'influence des bruits affectant les angles de la centrale inertielle du véhicule porteur à l'instant de l'initialisation, la recopie se poursuit par un asservissement en boucle fermée d'une certaine durée des informations $\psi$, $\Theta$ et $\phi$ de la centrale du véhicule porté sur celles de la centrale du véhicule porteur, de sorte qu'il se produit un filtrage éliminant l'influence desdits bruits. Toutefois, cette méthode suppose que les deux centrales inertielles sont parallèles (ou que l'on en connaît l'orientation relative). Dans le cas --général-- où l'orientation relative des deux centrales inertielles n'est pas parfaitement connue, la recopie angulaire par asservissement laisse lesdites erreurs d'harmonisation, entre les deux systèmes d'axes de référence de calcul des deux centrales, dues au défaut de parallélisme ou de connaissance de la position angulaire entre les deux centrales inertielles.

Une autre méthode est dérivée de celle décrite dans l'ouvrage NAVIGATION INERTIELLE OPTIMALE ET FILTRAGE STATISTIQUE de FAURRE, CAMBERLEIN et CHEVREUIL, DUNOD éditeur, 1971, chapitre 11. Dans cet ouvrage, on traite de l'alignement d'une centrale inertielle fixe.

Cependant, en considérant les variations d'informations accélérométriques entre deux centrales inertielles en mouvement, au lieu des informations de la centrale inertielle fixe, on se ramène du cas de l'alignement d'une centrale fixe à l'alignement d'une centrale mobile sur une autre centrale ayant le même mouvement. Selon cette méthode, après initialisation similaire de $\psi$, $\Theta$ et $\phi$, on procède à un alignement par asservissement en boucle fermée de la verticale à partir des écarts de vitesses ou d'accélérations par rapport aux axes N et aux axes E des deux systèmes de référence de calcul et par asservissement du cap. Dans cette méthode, on met à profit que, pour une trajectoire rectiligne à vitesse constante, les écarts d'accélération mesurés $\Delta\gamma N$ et $\Delta\gamma E$, par rapport aux axes N et E de référence de calcul de chacune des deux centrales inertielles, sont du type :

$$(1) \qquad \Delta\gamma N = - g\phi2$$
$$(2) \qquad \Delta\gamma E = g\phi1$$

g étant l'accélération de la pesanteur et $\phi1$ et $\phi2$, respectivement les décalages angulaires définis ci-dessus. Ainsi, à partir de mesures de $\Delta\gamma N$ et $\Delta\gamma E$, on peut calculer des commandes de rotation $\phi1co$ et $\phi2co$, respectivement autour des axes Nord et Est de référence de calcul de la centrale inertielle du véhicule porté, et les appliquer par une boucle d'asservissement du deuxième ordre, c'est-à-dire avec intégration, à la centrale inertielle du véhicule porté. Ainsi, à la suite des rotations autour des axes N et E, les axes verticaux Z des systèmes de référence de calcul des deux centrales deviennent alignés après convergence de l'asservissement à la fin duquel les commandes passées $\phi1co$ et $\phi2co$ valent respectivement $\Delta\gamma E_O/g$ et $-\Delta\gamma N_O/g$ où $\Delta\gamma E_O$ et $\Delta\gamma N_O$ sont les écarts moyens ( hors bruits ) en accélération avant la mise en route de l'asservissement. Il suffit alors d'asservir (de la manière décrite ci-dessus pour les angles $\psi$, $\Theta$ et $\phi$) en même temps le cap $\psi$ de la centrale inertielle du véhicule porté sur celui de la centrale inertielle du véhicule porteur pour que l'alignement global soit réalisé. Cette méthode présente l'inconvénient d'imposer la trajectoire du véhicule porteur au moment de l'initialisation (trajectoire rectiligne à vitesse constante) et laisse subsister, comme erreur systématique, l'erreur d'harmonisation en cap.

Par ailleurs, on a déjà mis en oeuvre un filtre de Kalman pour l'alignement d'une centrale inertielle sur une autre. Une telle méthode est par exemple décrite dans les ouvrages suivants :

- KALMAN FILTER FORMULATIONS FOR TRANSFER ALIGNMENT OF STRAPDOWN INERTIAL UNITS, de Alan M. SCHNEIDER, NAVIGATION, Journal of the Institute of Navigation, Vol. 30, N° 1, Spring 1983, pages 72 à 89 ;
- THE ENIGMA OF FALSE BIAS DETECTION IN A STRAPDOWN SYSTEM DURING TRANSFER ALIGNMENT, de I.Y. BAR-ITZHACK et Y. VITEK, Journal of Guidance, Vol. 8, N° 2, mars-avril 1985, pages 175 à 180 ;
- RAPID TRANSFER ALIGNMENT FOR TACTICAL WEAPON APPLICATIONS de James E. KAIN et James R. CLOUTIER, compte-rendu de la conférence de l'American Institute of Aeronautics and Astronautics, 370, l'Enfant Promenade, S.W. Washington DC 20024, "Guidance Navigation and Control Conference", Boston, 14-16 août 1989.

Cette méthode d'alignement par filtrage de Kalman est basée sur le fait que, si $\phi1$, $\phi2$ et $\phi3$ sont tels que définis ci-dessus, on peut écrire :

$$(3) \qquad \Delta\gamma N = \gamma E.\phi3 - \gamma Z.\phi2$$
$$(4) \qquad \Delta\gamma E = - \gamma N.\phi3 + \gamma Z.\phi1$$

expressions dans lesquelles $\gamma N$, $\gamma E$ et $\gamma Z$ sont respectivement les accélérations selon les axes Nord, Est et vertical de la centrale inertielle du véhicule porteur, et $\Delta\gamma N$ et $\Delta\gamma E$ les écarts d'accélération mesurés par les deux centrales suivant leurs axes propres Nord et Est de référence de calcul.

On remarquera que si le véhicule porteur se déplace à vitesse constante, on a $\gamma N = \gamma E = 0$ et $\gamma Z = g$. Dans ce cas, les équations (3) et (4) se ramènent respectivement aux équations (1) et (2) ci-dessus.

Ainsi, si l'on considère un filtre de Kalman d'état $X^T$ = [ΔVN, ΔVE, $\phi$1, $\phi$2, $\phi$3] alimenté par la mesure de vitesse [ΔVN, ΔVE] ou d'accélération ΔγN, ΔγE il exploite les équations (3) et (4) et son modèle d'état est :

$$
(I) \left\{
\begin{array}{rcl}
\Delta \dot{V}N &=& \gamma\,E.\phi3 \; - \; \gamma\,Z.\phi2 \\
\Delta \dot{V}E &=& -\,\gamma\,N.\phi3 \; + \; \gamma\,Z.\phi1 \\
\dot{\phi}1 &=& 0 \\
\dot{\phi}2 &=& 0 \\
\dot{\phi}3 &=& 0
\end{array}
\right.
$$

Le filtre pourrait être complété sans changement de principe par :
- une mesure d'écart de vitesses verticales ΔVZ et d'accélérations verticales ΔγZ,
- l'addition dans son modèle de l'équation d'évolution

$$\Delta \dot{V} Z = -\gamma E\phi1 + \gamma N.\phi2.$$

Un modèle d'état plus complexe pourrait inclure une modélisation des erreurs d'instrumentation de la centrale portée (dérive gyromètre ou gyroscope, biais accéléromètre, etc ...). Séquentiellement, on initialise ($\psi$, $\Theta$, $\phi$) de la centrale portée sur les informations correspondantes de la centrale du porteur, puis on lance le filtre de Kalman.

On remarquera, à propos de cette méthode d'alignement par filtrage de Kalman, que :
- si le véhicule porteur est à vitesse constante, puisque les équations (3) et (4) sont ramenées aux équations (1) et (2), la méthode de permet pas d'estimer l'erreur de cap $\phi$3. L'erreur de principe en cap est alors la somme de l'erreur d'harmonisation en cap h3C et de l'erreur d'initialisation en cap ;
- si le véhicule porteur se déplace de façon que les évolutions, dans le temps, de γE et γZ, d'une part, et de γN et de γZ, d'autre part, ne sont pas proportionnelles, elles sont discernables l'une de l'autre, et le système est dit observable. Le filtre de Kalman permet alors d'estimer les trois erreurs $\phi$1, $\phi$2 et $\phi$3, et donc réalise un alignement sans erreur de principe notable ;
- si la trajectoire du véhicule porteur entraîne un faible contraste entre les évolutions temporelles de γE et de γZ, et de γN et de γZ, le système présente une faible observabilité, et les estimations de $\phi$1, $\phi$2 et $\phi$3 seront mauvaises, surtout en ce qui concerne l'erreur de cap $\phi$3, qui comporte l'influence de l'erreur d'harmonisation en cap et celle de l'erreur d'initialisation en cap. La méthode d'alignement par filtrage de Kalman n'est alors pas utilisable.

La présente invention a pour objet de remédier aux inconvénients des trois méthodes connues rappelées ci-dessus et elle concerne un système permettant, à la fois :
- de ne pas imposer de trajectoire précise au véhicule porteur ;
- d'estimer les erreurs $\phi$1, $\phi$2 et $\phi$3 si la trajectoire du véhicule porteur rend le système observable ;
- de ne laisser subsister, comme erreur principale, que l'erreur d'harmonisation en cap, si l'observabilité du système par la trajectoire du véhicule porteur est faible ou nulle ;
- d'identifier, suivant les cas, les erreurs d'harmonisation entre les deux centrales inertielles :
  . de verticale et de cap, si la trajectoire du véhicule porteur rend le système observable,
  . de verticale uniquement, si la trajectoire rectiligne à vitesse constante ne rend pas l'erreur de cap observable.

A cette fin l'invention concerne un système selon la revendication 1.

Bien entendu, les moyens de soustraction peuvent être incorporés au filtre de Kalman, de sorte que celui-ci reçoit alors directement les informations de vitesse ou d'accélération délivrées par les première et seconde centrales inertielles de navigation.

On voit que, dans le système conforme à la présente invention, le filtre de Kalman est, en quelque sorte, monté en parallèle sur le dispositif d'asservissement et fonctionne en même temps, de sorte qu'il permet d'identifier les erreurs résiduelles laissées par ledit dispositif d'asservissement et principalement constituées par les erreurs d'harmonisation qui n'ont pas été identifiées par le dispositif d'asservissement. On remarquera qu'ainsi on associe un procédé en boucle ouverte (filtre de Kalman) à l'asservissement en boucle fermée effectué par ledit dispositif d'asservissement.

Selon une première forme de réalisation, le dispositif d'asservissement est du premier type décrit ci-dessus et il asservit les informations angulaires délivrées par ladite seconde centrale inertielle de navigation aux informations angulaires délivrées par ladite première centrale inertielle de navigation. Dans ce cas, si la trajectoire du véhicule porteur rend le système observable, le système selon l'invention permet d'identifier, à part, par le filtre de Kalman, les erreurs d'harmonisation entre lesdites première et seconde centrales inertielles de navigation. Si la trajectoire ne rend pas le système observable, seul l'asservissement du cap est nécessaire pour assurer la réduction automatique de l'erreur de cap à celle d'harmonisation en cap ; l'asservissement en $\Theta$ et $\phi$, qui n'est alors pas indispensable, permet de réduire les valeurs angulaires résiduelles à identifier et d'identifier à part, à la sortie du filtre de Kalman, les erreurs d'harmonisation de verticale.

Selon une seconde forme de réalisation, dans laquelle lesdits premier et second systèmes d'axes de référence comportent un axe vertical, ledit dispositif d'asservissement est du second type décrit ci-dessus et il asservit, d'une part, la position de l'axe vertical de calcul dudit second système d'axes de référence sur celle de l'axe vertical de calcul dudit premier système d'axes de référence et, d'autre part, l'information de cap délivrée par ladite seconde centrale inertielle de navigation à l'information de cap délivrée par ladite première centrale inertielle de navigation. Ainsi, si la trajectoire du véhicule porteur rend le système observable, le système selon l'invention permet alors d'identifier, à part, l'erreur d'harmonisation en cap.

De préférence, quel que soit le type du dispositif d'asservissement, le système selon l'invention comporte un superviseur associé audit filtre de Kalman, pour en améliorer les performances d'estimation.

Par ailleurs, il est avantageux que le système conforme à la présente invention comporte, entre ladite première centrale inertielle de navigation et lesdits moyens de soustraction, des premiers moyens de calcul permettant la correction d'erreurs de vitesse ou d'accélération dues au bras de levier séparant lesdites première et seconde centrales inertielles de navigation.

Puisque, comme cela a été mentionné ci-dessus, le système selon l'invention permet, en cas d'observabilité de la trajectoire du véhicule porteur, l'identification des erreurs d'harmonisation (de verticale et de cap ou de cap uniquement, suivant le type du dispositif d'asservissement), il est avantageux de prévoir des seconds moyens de calcul recevant les estimées d'erreur provenant du filtre de Kalman, éventuellement par l'intermédiaire de son superviseur, et effectuant sur ces estimées un changement de coordonnées pour les faire passer dudit premier système d'axes de référence à un troisième système d'axes, lié audit premier véhicule et par rapport auquel sont définies les erreurs d'harmonisation. Ainsi, dans le cas où ledit second véhicule fait partie d'une pluralité de véhicules interchangeables susceptibles d'être montés successivement sur ledit premier véhicule à une position fixe, les informations délivrées par lesdits seconds moyens de calcul à propos d'un second véhicule --informations qui concernent la part des erreurs d'harmonisation due audit premier véhicule-- peuvent être utilisées pour corriger cette part d'erreur d'harmonisation pour un autre second véhicule postérieurement monté sur ledit premier véhicule, par exemple en modifiant les calages mécaniques entre ledit premier et ledit second véhicules, ou en effectuant une compensation de calcul d'angle au niveau de la centrale inertielle du véhicule porté.

Le système conforme à la présente invention s'applique à tout type de centrale inertielle utilisée pour ladite première et/ou ladite seconde centrale inertielle de navigation ; celles-ci peuvent être du type stabilisé ou du type strap-down. De plus, le système est utilisable quel que soit le type du véhicule porteur ou celui du véhicule porté.

Les figures du dessin annexé feront bien comprendre comment l'invention peut être réalisée. Sur ces figures, des références identiques désignent des éléments semblables.

Les figures 1a et 1b illustrent une application du système conforme à l'invention, la figure 1a montrant en vue de dessus un avion de combat emportant un missile accroché sous l'une de ses ailes, tandis que la figure 1b montre, en vue de côté, ledit missile accroché sous ladite aile, celle-ci n'étant représentée que partiellement.

La figure 2 est le schéma synoptique simplifié du système conforme à la présente invention.

La figure 3 donne le schéma synoptique d'un exemple de réalisation du système conforme à la présente invention.

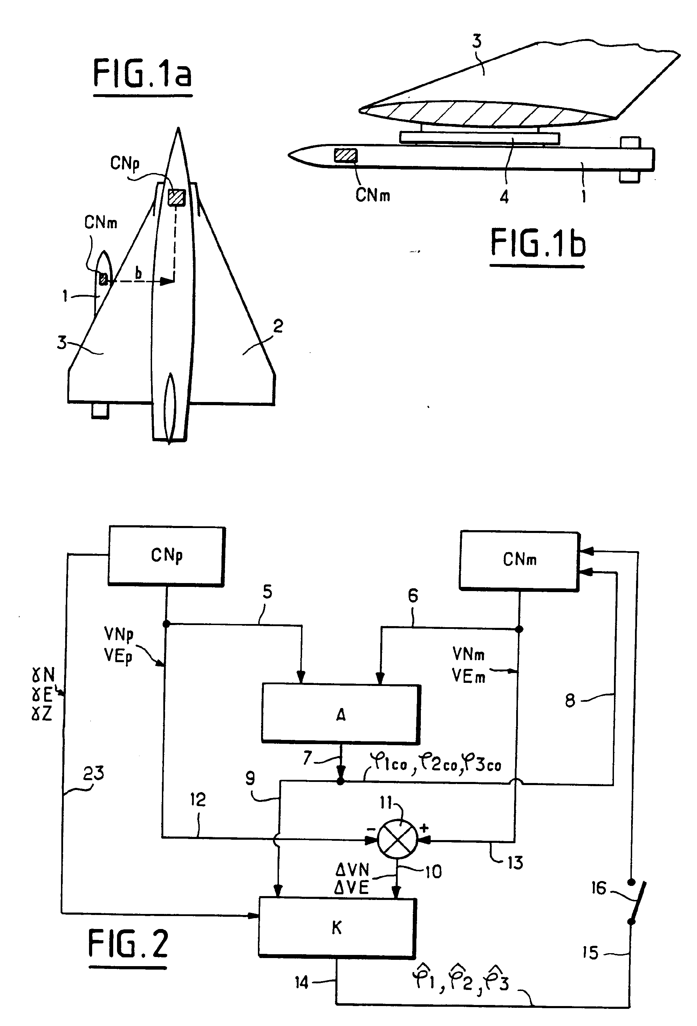

Sur les figures 1a et 1b, on a illustré schématiquement une application de la présente invention à l'alignement de la centrale inertielle de navigation CNm d'un missile 1 sur la centrale inertielle de navigation CNp d'un avion porteur 2.

Le missile embarqué 1 est accroché sous une aile 3 de l'avion porteur 2, par l'intermédiaire d'un dispositif lance-missile 4, le missile 1 étant sensiblement parallèle à l'axe de l'avion.

Le schéma synoptique de la figure 2 illustre le système conforme à l'invention destiné à l'alignement de la centrale inertielle CNm du missile 1 sur la centrale inertielle CNp de l'avion 2, avant le tir dudit missile.

Le système de la figure 2 comporte un dispositif d'asservissement A, de l'un ou l'autre des deux types connus rappelés ci-dessus. Ce dispositif d'asservissement A reçoit, par les liaisons 5 et 6, les signaux de sortie des deux centrales CNp et CNm. Qu'il soit du type à asservissement angulaire ou du type à asservissement de verticale et de cap, il délivre à sa sortie 7 trois commandes angulaires d'asservissement $\phi$1co, $\phi$2co et $\phi$3co, qu'il adresse, par la liaison 8, à la centrale CNm du missile 1, pour que celle-ci corrige ses mesures par rotation des trois axes de son système de référence de calcul.

De plus, le système de la figure 2 comporte un filtre de Kalman K, recevant, par une liaison 9, les commandes angulaires d'asservissement φ1co, φ2co et φ3co de la sortie 7 du dispositif d'asservissement A. Le filtre de Kalman reçoit également, par une liaison 10, le signal de sortie d'un soustracteur 11. Celui-ci reçoit, par une liaison 12, les signaux de vitesse VNp et VEp ou d'accélération émis par la centrale inertielle CNp et, par une liaison 13, les signaux de vitesse VNm et VEm ou d'accélération émis par la centrale inertielle CNm, ces quatre signaux de vitesse ou d'accélération représentant les composantes de la vitesse ou de l'accélération desdites centrales respectivement par rapport à leur axe Nord et à leur axe Est. Ainsi, le signal de sortie du soustracteur 11 est composé des différences de vitesse ΔVN et ΔVE ou d'accélération, respectivement par rapport à l'axe Nord et à l'axe Est du système d'axes de la centrale CNp, entre les deux centrales CNp et CNm. Par, soit la centrale CNp (comme représenté sur la figure 2 par la liaison 23), soit la centrale CNm, le filtre de Kalman reçoit les accélérations γN, γE et γZ, respectivement suivant les axes Nord, Est et vertical. Le dispositif d'asservissement à et le filtre de Kalman K sont lancés de préférence en même temps.

Les commandes φ1co, φ2co et φ3co laissent, après l'asservissement par le dispositif à, des erreurs résiduelles d'initialisation des axes de référence de calcul de la centrale du véhicule porté égales sensiblement aux erreurs d'harmonisation (uniquement en cap dans le cas d'un asservissement de verticale).

En même temps, le modèle du filtre de Kalman K étant du type

$$\dot{X} = AX + BU$$

avec U = (φ̇1co, φ̇2co, φ̇3co) et le filtre étant alimenté par la mesure ΔVN, ΔVE, on peut écrire (en négligeant les dérives angulaires) :

$$(II) \begin{cases} \Delta \dot{VN} & = & \gamma E.\phi3 - \gamma Z.\phi2 \\ \Delta \dot{VE} & = & - \gamma N.\phi3 + \gamma Z.\phi1 \\ \dot{\phi}1 & = & \dot{\phi}1co \\ \dot{\phi}2 & = & \dot{\phi}2co \\ \dot{\phi}3 & = & \dot{\phi}3co \end{cases}$$

Le filtre de Kalman délivre donc à sa sortie 14, des estimées $\hat{\phi}1$, $\hat{\phi}2$, $\hat{\phi}3$ des erreurs d'harmonisation, projetées sur les axes de référence N, E et Z de la centrale du véhicule porteur, des axes physiquement liés à la centrale CNm par rapport à ceux liés à la centrale CNp.

Par la liaison 15, comportant un interrupteur 16 normalement ouvert, le filtre de Kalman K transmet les estimées $\hat{\phi}1$, $\hat{\phi}2$ et $\hat{\phi}3$ à la centrale CNm du missile 1, à la fin de l'asservissement dû au dispositif A et après sa convergence propre. Cette transmission est effectuée par fermeture de l'interrupteur 16.

Ainsi, à la réception des commandes $\hat{\phi}1$, $\hat{\phi}2$, $\hat{\phi}3$ élaborées par le filtre de Kalman K, la centrale CNm fait tourner les axes de son système de référence de calcul de façon correspondante pour finir l'alignement de ceux-ci sur ceux du système de référence de la centrale CNp.

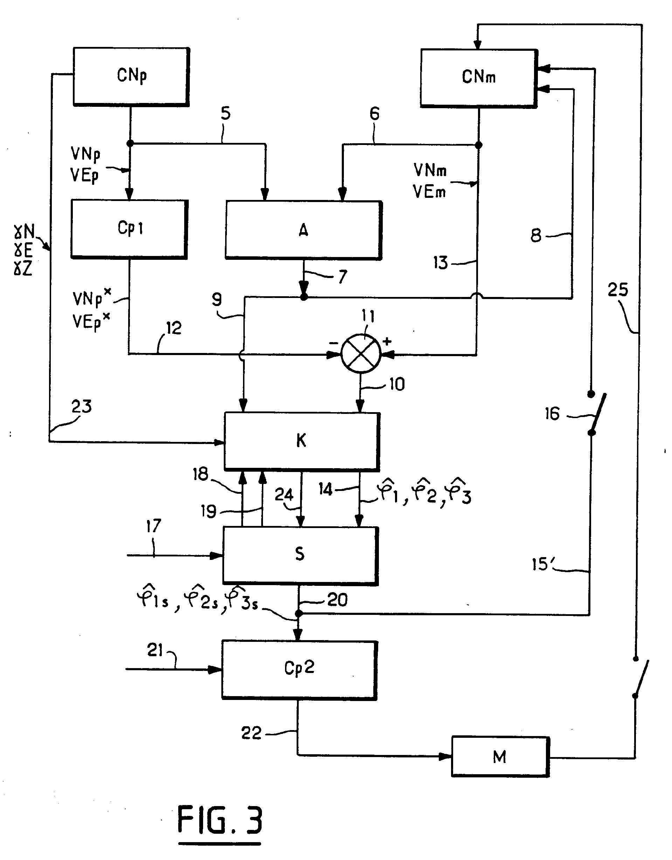

Dans le mode de réalisation illustré par la figure 3, on retrouve les dispositifs CNp, CNm, A, 11, K et 16, les liaisons 5,6,8,9,10 et les sorties 7 et 14. Toutefois, le système de la figure 3 comporte de plus des moyens de calcul Cp1 interposés dans la liaison 12, un superviseur S associé au filtre de Kalman K, des moyens de calcul Cp2 et une mémoire M.

Les moyens de calcul Cp1 ont pour objet de tenir compte du bras de levier b séparant les centrales inertielles de navigation CNp et CNm et de modifier les vitesses VNp et VEp ou les accélérations pour les ramener du point d'implantation de la centrale CNp à celui de la centrale CNm. Une telle correction est simple et usuelle et ne sera pas décrite plus en détail. Ainsi, ce sont les informations de vitesse VN $\overset{x}{p}$ et VE $\overset{x}{p}$, corrigées de l'effet du bras de levier b, qui sont adressées par la liaison 12 au soustracteur 11.

Le superviseur S reçoit, de la sortie 14 du filtre de Kalman K, les commandes $\hat{\phi}1$, $\hat{\phi}2$ et $\hat{\phi}3$ et, sur une entrée 17, des informations sur la trajectoire de l'avion 2, provenant du calculateur de vol (non représenté) de celui-ci. Le superviseur S a pour objet d'améliorer les performances d'estimation du filtre de Kalman K et pour ce faire :

- il réalise des réglages adaptatifs des covariances de bruit d'état et de bruit de mesure en fonction de l'observabilité du système par la trajectoire de l'avion 2 et de la nature des bruits de mesure. Il adresse ces réglages au filtre de Kalman K par les liaisons 18 et 19. De tels réglages adaptatifs peuvent être par exemple réalisés d'une façon voisine à celle décrite dans la communication "Supervision d'un filtre de Kalman par système expert temps réel - Application à la navigation d'un satellite" de D. BERTON, T. CODRON, R. HORAK et S. SALLE, SAGEM, Centre d'Etude d'Eragny, B.P. 51, 95612 Cergy-Pontoise Cedex, Colloque National mars 1989, S.M.A.I., L'automatique pour l'aéronautique et l'espace ;

- il valide l'estimée $\hat{\phi}3$ en cap si la covariance d'erreur sur le cap, calculée par le filtre de Kalman K et fournie par une liaison 24, passe sous un seuil réglable en fonction de la précision désirée. En effet, le système conforme à la présente invention permet d'aligner la centrale CNm sur la centrale CNp avec une trajectoire de l'avion 2 (ou d'un autre véhicule porteur tel qu'un bateau) peu favorable à l'identification rapide des erreurs, mais sans manoeuvre spécifique. Le pilote de l'avion 2 doit alors connaître, à tout instant, quelle est la performance atteinte en cap, compte-tenu de la trajectoire de l'avion 2. Il est donc important que l'erreur estimée $\hat{\phi}3$ soit validée à partir d'une estimation de l'erreur d'identification atteinte sur cette erreur estimée ;
- il filtre, de façon usuelle, les estimées $\hat{\phi}1$, $\hat{\phi}2$ et $\hat{\phi}3$ pour délivrer à sa sortie 20 des valeurs identifiées filtrées $\hat{\phi}1$, $\hat{\phi}2$, $\hat{\phi}3s$. A la fin de l'action du dispositif d'asservissement A et de la convergence validée du filtre de Kalman, ces valeurs identifiées et filtrées sont transmises, par une liaison 15' dans laquelle est interposé l'interrupteur 16, à la centrale inertielle CNm du missile 1, de sorte que celle-ci peut effectuer la rotation correctrice de son système d'axes de référence.

Les moyens de calcul Cp2 reçoivent, de la sortie 20 du superviseur S, lesdites valeurs identifiées et filtrées $\hat{\phi}1$, $\hat{\phi}2$ et $\hat{\phi}3s$ (qui se trouvent alors dans le système d'axes de référence de calcul de la centrale CNp) et les projette par les rotations $\psi$, $\Theta$ et $\phi$ sur les axes liés à la centrale CNm pour obtenir les erreurs d'harmonisation. Pour cela, ils reçoivent du calculateur de vol, sur une entrée 21, les différentes informations de la trajectoire dudit avion 2. Ainsi, à la sortie 22 des moyens de calcul Cp2 apparaît la part des erreurs d'harmonisation, dans les axes de la centrale CNm, due à la centrale CNp. Ces dernières informations sont stockées dans la mémoire M.

Par suite, lorsque le missile 1 ayant été tiré, il est remplacé par un missile identique fixé de façon identique sous l'aile 3 grâce au même dispositif lance-missile 4, il est possible, lors de l'alignement de la centrale de ce nouveau missile, de tenir compte immédiatement (soit par calage physique, soit par logiciel grâce à une liaison commandée 25) de cette partie des erreurs d'harmonisation et donc de réduire la valeur des corrections à apporter par le dispositif d'asservissement A et par le filtre de Kalman K, éventuellement associé à son superviseur S.

## Revendications

1. Système comportant :
   - un premier véhicule (2), en mouvement, pourvu d'une première centrale inertielle de navigation (CNp), en fonctionnement, rapportée à un premier système intrinsèque d'axes de référence, lié à un système d'axes terrestres ;
   - un second véhicule (1), pourvu d'une seconde centrale inertielle de navigation (CNm), devant être mise en fonctionnement, rapportée à un second système intrinsèque dont les axes de référence sont deux à deux parallèles à ceux dudit premier système intrinsèque d'axes de référence, ledit second véhicule (1) étant porté par ledit premier véhicule (2) et immobile en moyenne par rapport audit premier véhicule ;
   - des moyens de soustraction (11) recevant des informations de la part desdites première et seconde centrales inertielles de navigation (Np et CNm) et délivrant des informations de différence ; et
   - un filtre de Kalman (K) recevant lesdites informations de différence de la part desdits moyens de soustraction (11),
   caractérisé en ce que :
   - il comporte de plus un dispositif d'asservissement en boucle fermée (A) permettant à ladite seconde centrale inertielle de navigation (CNm) de connaître, à l'instant de sa mise en fonctionnement, les informations angulaires délivrées par ladite première centrale inertielle de navigation (CNp) par rapport audit premier système d'axes de référence, ledit dispositif d'asservissement (A) délivrant ensuite des commandes de rotation appliquées à ladite seconde centrale inertielle de navigation afin d'en affiner l'initialisation angulaire ;
   - lesdits moyens de soustraction (11) reçoivent desdites première et seconde centrales inertielles de navigation (CNp et CNm) les informations de vitesse ou d'accélération que celles-ci délivrent, respectivement, parallèlement à deux axes non verticaux desdits premier et second systèmes d'axes de référence de calcul, lesdits moyens de soustraction délivrant des informations de différence de vitesse ou d'accélération, parallèlement aux deux axes correspondants non verticaux dudit premier système d'axes de référence de calcul ; et
   - ledit filtre de Kalman (K) reçoit, à la fois, lesdites commandes de rotation dudit dispositif d'asservissement (A) et lesdites informations de différence de vitesse ou d'accélération, et calcule des estimées des décalages angulaires d'axes dudit second système d'axes de référence de calcul, corrigé par l'asservissement précédent, par rapport aux axes correspondants dudit premier système d'axes de référence de calcul, ledit filtre de Kalman appliquant lesdites estimées à ladite seconde centrale inertielle de navigation, à la fin de l'asservissement effectué par ledit dispositif d'asservissement et après convergence propre dudit filtre de Kalman.

2. Système selon la revendication 1,
caractérisé en ce que ledit dispositif d'asservissement (A) asservit les informations angulaires délivrées par ladite seconde centrale inertielle de navigation (CNm) aux informations angulaires délivrées par ladite première centrale inertielle de navigation (CNp).

3. Système selon la revendication 1, dans lequel lesdits premier et second systèmes d'axes de référence de calcul comportent un axe vertical,
caractérisé en ce que ledit dispositif d'asservissement (A) asservit, d'une part, la position de l'axe vertical dudit second système d'axes de référence de calcul sur celle de l'axe vertical dudit premier système d'axes de référence de calcul et, d'autre part, l'information de cap délivrée par ladite seconde centrale inertielle de navigation à l'information de cap délivrée par ladite première centrale inertielle de navigation.

4. Système selon l'une quelconque des revendications 1 à 3,
caractérisé en ce qu'il comporte un superviseur (5) associé audit filtre de Kalman.

5. Système selon l'une quelconque des revendications 1 à 4,
caractérisé en ce qu'il comporte, entre ladite première centrale inertielle de navigation et lesdits moyens de soustraction, des moyens de calcul (Cp1) permettant la correction d'erreur de vitesse ou d'accélération due au bras de levier (b) séparant lesdites première et seconde centrales inertielles de navigation.

6. Système selon l'une quelconque des revendications 1 à 5,
caractérisé en ce qu'il comporte des seconds moyens de calcul (Cp2) recevant les estimées d'erreur provenant du filtre de Kalman (K) et effectuant sur celles-ci un changement de coordonnées pour les faire passer dudit premier système d'axes de référence à un troisième système d'axes, lié audit premier véhicule.

7. Système selon la revendication 6,
caractérisé en ce qu'il comporte une mémoire (M) pour emmagasiner lesdites estimées d'erreur après changement de coordonnées.

**Claims**

1. System mit:
   - einem ersten in Bewegung befindlichen Fahrzeug (2) mit einem ersten in Betrieb befindlichen Trägheitsnavigations-Leitwerk (CNp), das auf ein erstes mit einem Erdachsensystem verbundenes Bezugsachsen-Eigensystem bezogen ist;
   - einem zweiten Fahrzeug (1) mit einem zweiten in Betrieb zu nehmenden Trägheitsnavigations-Leitwerk (CNm), das auf ein zweites Eigensystem bezogen ist, dessen Bezugsachsen paarweise parallel zu denen des ersten Bezugsachsen-Eigensystems verlaufen, wobei das zweite Fahrzeug (1) vom ersten Fahrzeug (2) mitgefuhrt wird und im Durchschnitt gegenüber dem ersten Fahrzeug unbeweglich ist;
   - Subtraktionsmitteln (11) zum Erhalt von Informationen aus dem ersten und zweiten Trägheitsnavigations-Leitwerk (CNp und CNm) und zur Abgabe der Differenzinformationen; und
   - einem Kalmanfilter (K) zum Erhalt der Differenzinformationen aus den Subtraktionsmitteln (11), dadurch gekennzeichnet, daß:
   - es zusätzlich eine Closed-Loop Regelvorrichtung (A) hat, durch die das zweite Trägheitsnavigations-Leitwerk (CNm) bei seiner Inbetriebnahme die vom ersten Trägheitsnavigations-Leitwerk (CNp) in Bezug auf das erste Bezugsachsensystem abgegebenen Winkelinformationen mitgeteilt bekommt, wobei die Regelungsvorrichtung (A) anschließend Rotationsbefehle an das zweite Trägheitsnavigations-Leitwerk zur Verbesserung der Winkelinitialisierung desselben abgibt;
   - die Subtraktionsmittel (11) vom ersten und zweiten Trägheitsnavigations-Leitwerk (CNp und CNm) die Geschwindigkeits- oder Beschleunigungsinformationen erhalten, die diese parallel zu zwei nicht vertikalen Achsen des ersten bzw. zweiten rechnerischen Bezugsachsensystems abgeben, wobei die Subtraktionsmittel parallel zu den zwei entsprechenden nicht vertikalen Achsen des ersten rechnerischen Bezugsachsensystems Geschwindigkeits- oder Beschleunigungsdifferenzinformationen abgeben; und

- der Kalmanfilter (K) gleichzeitig die Rotationsbefehle der Regelungsvorrichtung (A) und die Geschwindigkeits- oder Beschleunigungsdifferenzinformationen erhält und Schätzungen der Achsenwinkelverschiebungen des zweiten durch die obige Regelung korrigierten rechnerischen Bezugsachsensystems im Vergleich zu den entsprechenden Achsen des ersten rechnerischen Bezugsachsensystems berechnet, wobei der Kalmanfilter die Schätzungen dem zweiten Trägheitsnavigations-Leitwerk nach beendeter Regelung durch die Regelungsvorrichtung und nach Eigenkonvergenz des Kalmanfilters aufgibt.

2. System nach Anspruch 1,
dadurch gekennzeichnet, daß die Regelungsvorrichtung (A) die Winkelinformationen des zweiten Trägheitsnavigations-Leitwerks (CNm) entsprechend den Winkelinformationen des ersten Trägheitsnavigations-Leitwerks (CNp) regelt.

3. System nach Anspruch 1, bei dem das erste und zweite rechnerische Bezugsachsensystem eine vertikale Achse haben,
dadurch gekennzeichnet, daB die Regelungsvorrichtung (A) einerseits die Position der vertikalen Achse des zweiten rechnerischen Bezugsachsensystems nach der vertikalen Achse des ersten rechnerischen Bezugsachsensystems und andererseits die Kursinformation des zweiten Trägheitsnavigations-Leitwerks nach der Kursinformation des ersten Trägheitsnavigations-Leitwerks regelt.

4. System nach einem der Ansprüche 1 bis 3,
dadurch gekennzeichnet, daB es einen dem Kalmanfilter zugeordneten Supervisor (5) hat.

5. System nach einem der Ansprüche 1 bis 4,
dadurch gekennzeichnet, daß es zwischen dem ersten Trägheitsnavigations-Leitwerk und den Subtraktionsmitteln Rechenmittel (Cp1) zur Korrektur des Geschwindigkeits- oder Beschleunigungsfehlers durch den Hebelarm (b) zwischen dem ersten und dem zweiten Trägheitsnavigations-Leitwerk hat.

6. System nach einem der Ansprüche 1 bis 5,
dadurch gekennzeichnet, daß es zweite Rechenmittel (Cp2) für die Fehlerschätzungen aus dem Kalmanfilter (K) hat, die mit diesen eine Koordinatenänderung und damit eine Überführung aus dem ersten Bezugsachsensystem in ein drittes Achsensystem des ersten Fahrzeugs vornehmen.

7. System nach Anspruch 6,
dadurch gekennzeichnet, daß es einen Speicher (M) zur Speicherung der Fehlerschätzungen nach der Koordinatenänderung hat.

## Patentansprüche

1. System including:
- a first vehicle (2), in motion, provided with a first inertial navigation unit (CNp), operative, referred to a first intrinsic system of reference axes tied to a system of land axes;
- a second vehicle (1), provided with a second inertial navigation unit (CNm), to be made operative, referred to a second intrinsic system whose reference axes are pairwise parallel to those of the said first intrinsic system of reference axes, the said second vehicle (1) being carried by the said first vehicle (2) and stationary on average relative to the said first vehicle;
- subtraction means (11) receiving information from the said first and second inertial navigation units (Np and CNm) and delivering difference information; and
- a Kalman filter (K) receiving the said difference information from the said subtraction means (11), characterized in that:
- it moreover includes a closed-loop slaving device (A) enabling the said second inertial navigation unit (CNm) to ascertain, at the time it is made operative, the angular information delivered by the said first inertial navigation unit (CNp) with respect to the said first system of reference axes, the said slaving device (A) subsequently delivering rotation commands applied to the said second inertial navigation unit so as to refine the angular initialization thereof;

- the said subtraction means (11) receive from the said first and second inertial navigation units (CNp and CNm) the velocity or acceleration information which they deliver, respectively, in parallel to two non-vertical axes of the said first and second systems of computational reference axes, the said subtraction means delivering velocity or acceleration difference information, in parallel to the two corresponding non-vertical axes of the said first system of computational reference axes; and

- the said Kalman filter (K) receives, simultaneously both the said rotation commands of the said slaving device (A) and the said velocity or acceleration difference information, and computes estimates of the angular offsets of the axes of the said second system of computational reference axes, corrected by the above slaving, with respect to the corresponding axes of the said first system of computational reference axes, the said Kalman filter applying the said estimates to the said second inertial navigation unit, on completion of the slaving performed by the said slaving device and after actual convergence of the said Kalman filter.

2. System according to Claim 1, characterized in that the said slaving device (A) slaves the angular information delivered by the said second inertial navigation unit (CNm) to the angular information delivered by the said first inertial navigation unit (CNp).

3. System according to Claim 1, in which the said first and second systems of computational reference axes include a vertical axis,
characterized in that the said slaving device (A) slaves, on the one hand, the position of the vertical axis of the said second system of computational reference axes to that of the vertical axis of the said first system of computational reference axes and, on the other hand, the heading information delivered by the said second inertial navigation unit to the heading information delivered by the said first inertial navigation unit.

4. System according to any one of Claims 1 to 3, characterized in that it includes a supervisor (5) associated with the said Kalman filter.

5. System according to any one of Claims 1 to 4, characterized in that it includes, between the said first inertial navigation unit and the said subtraction means, computational means (Cpl) allowing the correction of velocity or acceleration error due to the lever arm (b) separating the said first and second inertial navigation units.

6. System according to any one of Claims 1 to 5, characterized in that it includes second computational means (Cp2) receiving the error estimates originating from the Kalman filter (K) and performing a change of co-ordinates on them so as to transform them from the said first system of reference axes to a third system of axes tied to the said first vehicle.

7. System according to Claim 6, characterized in that it includes a memory (M) for stashing the said error estimates after change of co-ordinates.

# FIG.1a

# FIG.1b

# FIG.2

## FIG. 3